(19) Europäisches Patentamt
European Patent Office
Office européen des brevets

(11) **EP 4 401 373 A1**

(12) **EUROPEAN PATENT APPLICATION**

(43) Date of publication:
**17.07.2024 Bulletin 2024/29**

(21) Application number: **23211885.1**

(22) Date of filing: **24.11.2023**

(51) International Patent Classification (IPC):
*H04L 41/0833* (2022.01)    *H04L 41/342* (2022.01)

(52) Cooperative Patent Classification (CPC):
**H04L 41/342; H04L 41/0833**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023  FI 20235034**

(71) Applicant: **Nokia Solutions and Networks Oy
02610 Espoo (FI)**

(72) Inventors:
• **OUTTAGARTS, Abdelkader
92160 Antony (FR)**
• **BUI, Dinh Thai
92290 Châtenay-Malabry (FR)**
• **HANNÁK, Gábor
1083 Budapest (HU)**

(74) Representative: **Nokia EPO representatives
Nokia Technologies Oy
Karakaari 7
02610 Espoo (FI)**

(54) **CONTROLLING NETWORK FUNCTION RESOURCE SCALING**

(57)  To take into account different behavior of network functions, values of dynamic characteristics for network functions are used when values of at least one control parameter for the network functions are determined. A number of instances to be instantiated or de-instantiated for a network function is determined based on at least a value of the at least one control parameter for a network function, and a target value and a latest value of at least one metric.

FIG.2

**Description**

TECHNICAL FIELD

Various example embodiments relate to communication systems.

BACKGROUND

Communication systems are under constant development. For example, an access network, or a core network, or both, may be implemented using a service-based architecture with different network functions and cloud computing, wherein an orchestrator manages network function related resources, such as a number of instances of a network function. Resources are usually scaled, e.g. the number of instances increased or decreased, according to resource usage, for example, in a similar way for network functions even though the network functions may have different behavior.

SUMMARY

The independent claims define the scope, and different embodiments are defined in dependent claims.

According to an aspect there is provided an apparatus comprising: means for determining values of at least one control parameter for network functions using values of dynamic characteristics of the network functions; means for determining for a network function a first number of instances to be instantiated or de-instantiated based on a target value and a latest value of at least one metric and at least a value of one control parameter for the network function; and means for controlling a number of instances of the network function based on the first number.

In embodiments, the means for determining the values are configured to perform the determining per a network function using dynamic characteristics of said network function, and the means for determining the first number and the means for controlling the number of instances are configured to perform the determining and the controlling for a plurality of network functions in parallel.

In embodiments, the dynamic characteristics comprise a time delay, a time constant and a gain.

In embodiments, the means for determining values are configured to determine the value of the one control parameter using a value of the time delay, and/or a value of the time constant and/or a value of the gain of the network function.

In embodiments, the dynamic characteristics comprise one or more energy consumption parameters.

In embodiments, the means for determining the first number are configured to perform the determining based also on earlier values and a predicted value of the at least one metric.

In embodiments, the at least one metric comprises at least one metric indicating a resource usage and at least one metric indicating energy consumption.

In embodiments, the means for determining the first number are configured to perform the determining by minimizing energy consumption and maximizing resource usage while maintaining agreed service level.

In embodiments, the apparatus further comprises: means for determining, based on feedback received after one or more network instances have been instantiated or re-instantiated for the network function, updated values of the dynamic characteristics of the network function; and means for causing storing the updated values of the dynamic characteristics of the network function to a data repository.

In embodiments, the apparatus further comprises: means for receiving requests for generating closed-loop controller instances for the network functions; means for generating closed-loop controller instances for the network functions, a closed-loop controller instance per a network function, wherein the means for determining the first number are configured to apply a closed-loop controller instance for the network function to determine the first number.

In embodiments, the apparatus comprises at least one processor, and at least one memory including computer program code, wherein the at least one processor with the at least one memory and computer program code provide said means.

According to an aspect there is provided a method comprising: determining values of at least one control parameter for network functions using values of dynamic characteristics of the network functions; determining for a network function a first number of instances to be instantiated or de-instantiated based on a target value and a latest value of at least one metric and at least a value of one control parameter for the network function; and controlling a number of instances of the network function based on the first number.

In embodiments, the method further comprises: determining the values per a network function using dynamic characteristics of said network function; and performing determining the first number and controlling the number of instances for a plurality of network functions in parallel.

In embodiments, the dynamic characteristics comprise a time delay, a time constant and a gain, and the value of the one control parameter is determined using a value of the time delay, and/or a value of the time constant and/or a value of the gain of the network function.

According to an aspect there is provided a computer readable medium comprising instructions stored thereon for performing at least the following: determining values of at least one control parameter for network functions using values of dynamic characteristics of the network functions; determining for a network function a first number of instances to be instantiated or de-instantiated based on a target value and a latest value of at least one metric and at least a value of one control parameter for the network function; and controlling a number of instances of the network function based on the first number.

In embodiments, the computer readable medium is a non-transitory computer readable medium.

According to an aspect there is provided a computer program comprising instructions which, when executed by an apparatus, cause the apparatus to perform at least the following: determining values of at least one control parameter for network functions using values of dynamic characteristics of the network functions; determining for a network function a first number of instances to be instantiated or de-instantiated based on a target value and a latest value of at least one metric and at least a value of one control parameter for the network function; and controlling a number of instances of the network function based on the first number.

According to an aspect there is provided a system comprising: means for accessing a data repository comprising at least values of dynamic characteristics of network functions to obtain the values; means for determining values of at least one control parameter for network functions using obtained values of dynamic characteristics of the network functions; means for determining for a network function a first number of instances to be instantiated or de-instantiated based on a target value and a latest value of at least one metric and at least a value of one control parameter for the network function; and means for controlling a number of instances of the network function based on the first number.

In embodiments, the system further comprises the data repository.

BRIEF DESCRIPTION OF DRAWINGS

Embodiments are described below, by way of example only, with reference to the accompanying drawings, in which

Fig. 1 illustrates an exemplified high-level data-driven service-based network architecture;
Fig. 2 is a flow chart illustrating an example functionality;
Fig. 3 is a high-level example of a control instance;
Fig. 4 illustrates an example of request-response operations;
Fig. 5 illustrates an example of behavior of a network function; and
Fig. 6 and Fig.7 are schematic block diagrams.

DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first number could be termed a number or a second number, and similarly, a number could be also termed a first number or a second number without departing from the scope of the present disclosure.

To provide variety of services, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification and blockchain technologies. For example, in the network slicing multiple independent and dedicated network slice instances may be created within the same infrastructure to run services that have different requirements on latency, reliability, throughput and mobility.

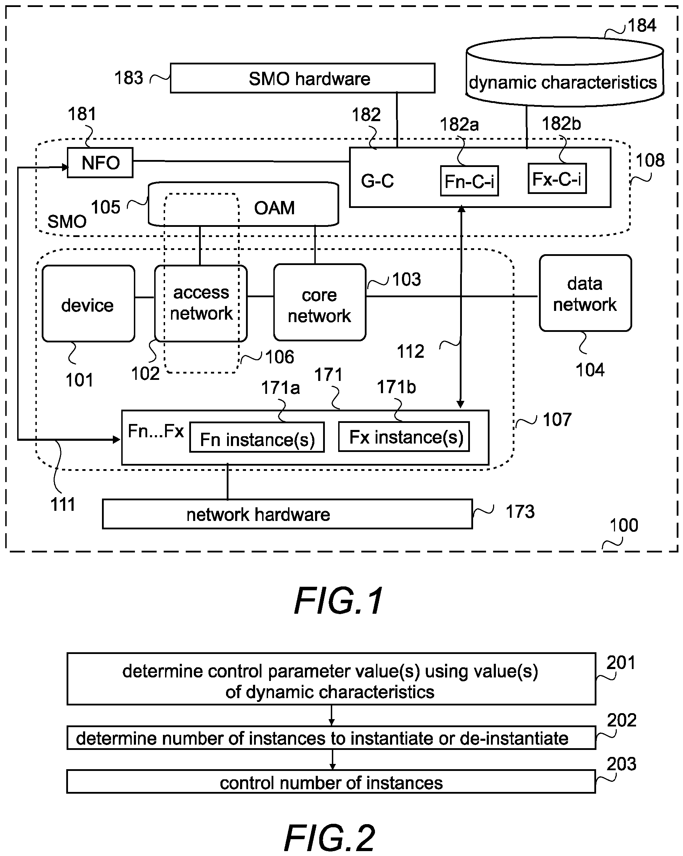

Fig. 1 illustrates an exemplified high-level cloud-native data-driven service-based network architecture only showing some functional entities, all being logical units, whose implementation may differ from what is shown. The connections shown in Fig. 1 are logical connections; the actual physical connections may be different.

The system 100 depicted in Fig. 1 is based on the 5G system, including the 5GC (5G core). The examples are described herein using principles and terminology of 5G system without limiting the examples, and the terminology used, to the 5G system. A person skilled in the art may apply the solutions and examples to other communication systems, for example beyond 5G, or communication system having only some portion(s) implemented using cloud technology, but yet provided with necessary properties. Further, it should be appreciated that only some operational entities and components, with a non-limiting example of their mapping, are disclosed.

The 5G system 100 is envisaged to use network functions virtualization, containerized network functions, network slicing, network sharing, edge computing and software-defined network. The network functions virtualization allows network functions to be virtualized in a cloud environment. The 5G system 100 is based on standalone access networks and a standalone core network via which networks services, for example, can be delivered between devices and data networks, for example the Internet. A device may be any electrical device connectable to an access network. The device may be a user equipment, a vehicle, a thing for Internet of things, an industrial thing for industrial Internet of things, on-person device, like wearable device, just to mention a few non-limiting examples. An access network may be any kind of an access network, such as a cellular access network, for example 5G-Advanced network, a non-terrestrial network, or legacy cellular radio access network, or a non-cellular access network, for example a wireless local area network, or a wired access network. In a similar manner, the core network may be a legacy core network a 5G core network, or beyond.

Referring to Fig. 1, disaggregated, virtualized and software-based components of the system 100 comprise device components 101 for device functionalities in device domain, access network components 102 for access network functionalities in access network domain, a core network component 103 for core network functionalities in core network domain, data network components 104 for data network functionalities in data network domain, and an operations, administration and management (OAM) component 105 in OAM domain for component/domain management, operation support system functionalities and orchestration on various levels. Components (elements, functional units) of service-based architecture may be implemented as applications, defined using network functions that may be cloud-native network functions, for example virtualized network functions or container network functions. A network function supports or hosts a collection of services, including applications, and offers one or more services to other network functions in the network. The network functions may be deployed as microservices. In the service-based architecture there are service consumers and service producers. A service consumer, or shortly a consumer, is a network function requesting a service from another network function, which is a service producer, or shortly a producer, that provides the service as a reply or a response. It should be appreciated that the request-response operation covers herein similar operations, such as subscribe-notify operation.

The system 100 may comprise following platforms, or frameworks: an open radio access network (open RAN, O-RAN) 106, standalone two (SA2) 107 and a service management and orchestration framework (SMO) 108. The open radio access platform 106 may be called a radio intelligent controller (RIC), and it comprises a non-real-time part (non-RT RIC) and a near-real-time part (near-RT RIC). The non-real-time part may be part of the SMO, and the near-real-time part may be on a radio access side. The purpose of both RICs is to optimize the RAN performance using machine learning agents running in the RICs. The SA2 platform 107 is a system architecture and service platform, and may comprise machine learning based services enablers for network automation. The platforms 106, 107 provide an abstraction platform to separate abstractions of network functions Fn...Fx 171 from the network processing hardware 173 on which different instances 171a, 171b of corresponding network functions are run. Correspondingly, the SMO 108 provides an abstraction platform to separate abstractions of different management and orchestrations functions from corresponding hardware 183, 184.

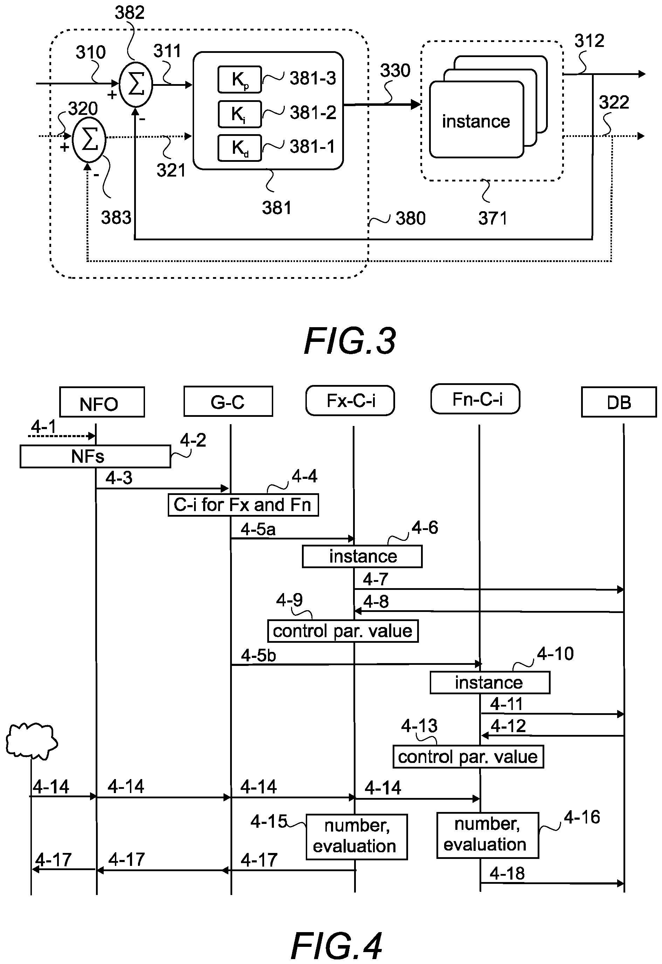

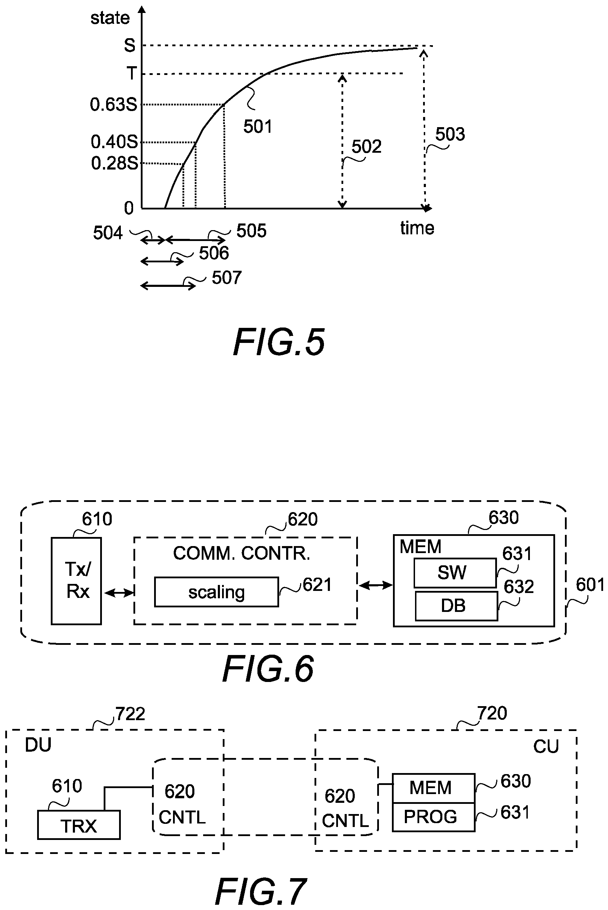

The SMO 108 comprises one or more network function orchestrators (NFO) 181. A network function orchestrator 181 is a functional entity to manage (coordinate) a plurality of network functions that provide network services and applications and/or contribute to network services, or applications by providing one or more parts of network services, or applications. The NFO comprises different functions, for example instantiation and de-instantiation of one or more instances 171a, 171b for network functions 171 over an interface 111, which may be an O2 interface. The NFO may collect data on different resource usage, for example, and can manage resources (hardware and software) for network services by means of the instances. In the illustrated example, a global controller (G-C) entity 181, is illustrated as a separate entity, and it will control, by means of different control instances 182a, 182b for the plurality of the network functions, a control instance per a network function, over an interface 112, at least a number of instances per a network function. It should be appreciated that the global controller 182 may be part of the NFO 181, and thereby also the control instances may be part of the NFO. The control instances 182a, 182b are run on the SMO hardware 183, using dynamic characteristics in a data repository 184, as will be described in more detail below. The data repository may be provided using any storage medium, for example cloud storages. The values of dynamic characteristics in the data repository 184 may be provided for a plurality of network functions, per a network function, as model parameters in a model of a network function. A non-limiting list of examples of dynamic characteristics include a time delay, a time constant and a gain and/or one or more energy consumption parameters. For example, there may be an energy consumption profile defined for a network function, and/or information indicating hardware characteristics in which the network function consumes less energy. The values of the dynamic characteristics may be input by vendors to the data repository, for example as part of metadata of a network function, or the values may be determined using raw data and machine learning, and/or the values may be empirically determined, for example as will be described below with Fig. 5. The raw data may be data collected by the FTO, processed to values of dynamic characteristics by a model extraction module, that may be a machine-learning based tool. Further, the control instances may update the values, as will be described below with Fig. 3 and Fig. 4. The data repository 184 may comprise also other information, for example for the NFO, per a network service instantiated, information about the network hardware within a processing pipeline for one or more network functions involved in the network service.

In the illustrated example of Fig. 1, there is for a network function Fn one or more Fn instances 171a and a control instance 182a, controlling the number of Fn instances 171a, and for a network function Fx one or more Fx instances 171b and a control instance 182b, controlling the number of Fx instances 171b . The interface 112 may be an infrastructure management service, O2-ims, part of the O2 interface, and/or a deployment management service, O2-dms, part of the O2 interface.

In the illustrated example of Fig. 1, the SMO is implemented as a single orchestrator able to orchestrate the resources of all domains. However, it should be appreciated that there may be domain-level orchestrators, for example per-domain orchestrators, and a higher-level entity, that coordinates the domain-level orchestrators.

The network hardware 173 and the SMO hardware 183 may comprise, for example, one or more hardware apparatuses comprising different general-purpose processors, or other commercial off-the-shelf devices or platforms and application programming interfaces between the devices and platforms. Further, the network hardware 173 and the SMO hardware 183 may share the same hardware.

Fig. 2 illustrates an example functionality of an apparatus configured to run one or more control instances for corresponding one or more network functions, for example a control instance per network function. In the illustrated example the process is described for a control instance of a network function for the clarity of the description. It should be appreciated that there may be several processes running in parallel, for example.

Referring to Fig. 2, one or more values of at least one control parameter for the network function are determined in block 201 using one or more values of dynamic characteristics of the network function. For example, a value per a dynamic characteristic of the network function for one or more dynamic characteristics are obtained (retrieved) from a data repository. The dynamic characteristics obtained may depend on a controlling algorithm implemented, for example dynamic characteristics for which values are needed, may be indicated, or the controlling algorithm may be indicated, and the data repository may store additional information associating dynamic characteristics with one or more controlling algorithms, or dynamic characteristics may be obtained controlling algorithm independently. The at least one control parameter and the way how the value of a control parameter are defined from the dynamic characteristics depends on a controlling algorithm used. A more detailed, non-limiting example is described with Fig. 3.

While the network function is active, a number (a first number) of instances to be instantiated or de-instantiated is determined in block 202. The first number is determined based on a target value and a latest value of at least one metric and at least a value of one control parameter for the network function, determined in block 202. The at least one metric may be a resource utilization, for example a computing resource utilization and/or a memory resource utilization, energy consumption, amount of network traffic, one or more metrics depicting quality of service, for example latency or reliability, etc. The metric may be a performance indicator, for example a key performance indicator. There are no limitations what a metric can be, as long as a target value of the metric can be given to the metric, for example based on the service or application or hardware resources, and a latest value of the metric can be determined or measured, for example based on network traffic, and/or energy consumption. When the number of instances to instantiate or de-instantiate has been determined, the number (a second number) of instances of the network function are controlled in block 203 based on the first number. In other words, scaling up and scaling down the instances is caused in block 203. Depending on an implementation and/or a network function, controlling the number of instances may include that at least one instance is maintained while the network function is active. Further, controlling the number of instances may include an instruction to group instances, or switch off/pause a node in which instances are running, or to deploy a monolithic network function or a disaggregate network function, etc.

Using values of dynamic characteristics to determine control parameter values provides a solution that takes into account different behaviors of network functions by adapting a control algorithm without adapting the underlying orchestrator algorithm. Further, using the thus adapted control parameter values, a target value of a metric and a latest value of the metric, result to an accurate provisioning with an optimized utilization of resources, which avoids overutilization of resources, which may leads to degraded performance, and underutilization, which may lead to ineffective resource usage. In other words, a risk that additional resources, i.e. instances, are allocated too late, and a risk that too much resources, i.e. too many instances, are running and underused, are minimized. Hence, robust control instances for a plurality of different network functions may be created or generated.

Fig. 3 is a high-level example of a control instance, depicting one non-limiting implementation example of a solution in which the control instance applies a closed-loop controller having multiple closed-loops for a network function. Implementing the solution to any number of closed-loops, including a single closed-loop controller for a network function, is a straightforward solution to a person skilled in the art.

In the example of Fig. 3, the control instance 380 comprises two closed loops, and the control instance 380 may be called a multi-closed-loop controller. In the illustrated example, one of the closed loops is for a central processing unit (CPU) usage metric, as an example of a resource usage metrics, and the other one for an energy consumption metric.

Referring to Fig. 3, in a first closed-loop a target value 310 may be a target value for the CPU usage, for example 80 %. The target value 310 is input to an entity 382 that determines a difference 311, that may be called an error, between the target value and the latest value 312 determined, for example a measured value of the CPU usage or a predicted value of the CPU usage. The latest value 312 may be called a current value. Correspondingly, in the example of Fig. 3, the target value 320 for the energy consumption, is input to an entity 382 that determines a difference 321 between the target value and the latest value 322 determined, for example a measured value or a predicted value of the energy consumption. Other feedback, for example a measured traffic load, may be used as input or to calculate a predicted value of an input.

The differences 311, 312 are input to a control algorithm entity 381 to determine the number of instances to instantiate or de-instantiate, for example by minimizing energy consumption and maximizing resource usage while maintaining agreed service level. In the illustrated example, the algorithm entity is using a value of the time delay, a value of the time constant and a value of the gain of the network function values to determine one or more controller parameters, which in the illustrated non-limiting example are a gain $K_p$, an integral term $K_i$ based on earlier values and an estimate term $K_d$ based on predicted value. For example, the value for the gain, $K_p$, may be provided in the metadata of the network function, or a static state value of the CPU usage may be given as a value of a dynamic parameter, and the value of the control parameter gain may be determined using the static state value of the CPU usage. The value of the integral term $K_i$ may depend on a value of the time delay and the value of the estimate term $K_d$ may depend on a value of the time constant. Same principles apply to the energy usage. It should be appreciated that although in the illustrated example the two closed loops share the controller parameter values, both closed loops may have their own control parameter values, i.e. a first value of the gain for the resource usage and a second value of the gain for the energy consumption, a first value of the integral term for the resource usage and a second value of the integral term for the energy consumption, and a first value of the derivate term for the resource usage and a second value of the derivate term for the energy consumption. Assuming a use of a proportional, integral and derivative (PID) algorithm, the number of instances to instantiate or de-instantiate may be determined by calculating, using following equation, per closed-loop, a value of u, which is then optimized by minimizing energy consumption and maximizing resource usage while maintaining agreed service level.

$$u = K_p e(t) + K_i \int_0^t e(x)\,dx + K_d \frac{de(t)}{dt}$$

wherein

u is a control variable
$K_p$ is the gain term
e(t) is the difference (error) at time t, or as a function of time
$K_i$ is the integral term
t is the time
x is the variable of integration
$K_d$ is the estimate term

Term p (proportional) in the variables means proportional to the latest value at time t. For example, if the difference is large, the control variable value will be proportionality large. Term i (integral) accounts for past values of the difference and integrates the past values over the time. For example, if there is a residual difference between the target value and the latest value after the application of the gain, the integral term $K_i$ seeks to eliminate the residual difference by adding a control effect due to the historic cumulative value of the difference. When the difference is eliminated, the integral term $K_i$ will cease to grow. Term d (derivate) is a best estimate of the future trend of the difference, based on its current rate of change. It may be called an anticipatory control since it seeks to reduce the effect of the difference by exerting a control influence generated by the rate of the difference change. The more rapid the change, the greater is the controlling or damping effect.

It should be appreciated that any other adaptive control algorithm may be used as well. For example, the PID algorithm may be amended by setting one or two of the gain term $K_p$, the integral term $K_i$ and the estimate term $K_d$ to be zero.

In an implementation, the control algorithm entity 380 is further configured to evaluate a system response based on the CPU usage and the energy consumption of the instances 371 when an instance is instantiated or re-instantiated, for example. The evaluation of the system response may use following equation

$$P(s) = \frac{K}{Ts + 1}\,e^{-\tau s}$$

wherein

P is a transfer function
s is the Laplace operator
K is process gain (corresponds to a gain of the network function)
T is the time constant of the network function

e is the Euler's number

$\tau$ is the time delay of the network function

The thus obtained updates may be used to update the value of the gain term, the integral term and the estimate term when calculating the control variables. Further, the thus obtained updates may be used, in addition or alternatively to updating a control instance, to update dynamic characteristics of the network function to the data repository. Hence, the dynamic characteristics are also adaptive to the actual situation.

Fig. 4 illustrates an example of request-response operations relating to control instances. In Fig. 4, it is assumed, for the sake of clarity that the NFO and the global control, G-C, are different entities, and that the control instances are depicted as separate entities, but they may run on the same hardware. Further, a database DB represent a data repository storing at least dynamic characteristics.

Referring to Fig. 4, when a request (message 4-1) to create a network slice, for example, with a descriptor describing what network functions is to be deployed, is received by the NFO entity, the NFO entity deploys (block 4-2) the network functions, which is in the illustrated example are network functions Fx and Fn. Deploying a network function includes creating a first instance of the network function. However, that is not illustrated in Fig. 4. In addition to deploying the network functions, the NFO entity transmits a request (message 4-3) to the G-C entity to create one or more control instances for the network functions. The request may indicate hardware resources to run the control instances, and the request comprises identifying information on the network functions, for example indicating network function types and/or model identifiers.

The G-C entity detects in block 4-4 that control instances (C-i) are requested for network functions Fx and Fn, and creates corresponding controller instances by transmitting a request per a controller instance to be created (generated). In the illustrated example, a first request (message 4-5a) is transmitted to create a control instance for the network function Fx, and a second request (message 4-5b) is transmitted to create a control instance for the network function Fn. The first request may comprise a model identifier of the network function Fx, and correspondingly, the second request may comprise a model identifier of the network function Fn. The requests (messages 4-5a, 4-5b) may also comprise information on the hardware, to obtain hardware dependent values of dynamic characteristics. It should be appreciated that requests to create instances may be sent in parallel or in another order than the one depicted in Fig. 4.

Upon receiving the first request (message 4-5a), a control instance Fx-C-i for the network function Fx is instantiated in block 4-6, and values of dynamic characteristics of the network function Fx are obtained (retrieved) by transmitting a corresponding request (message 4-7) to the DB, the request containing the model identifier of the network function Fx, and receiving the values in a response (message 4-8). Then, for at least one control parameter, a parameter value is determined in block 4-9, for example as described above, based on the received values (one or more values). In some implementations, the request may indicate characteristics whose values are needed to determine control parameter values.

Correspondingly, upon receiving the second request (message 4-5b), a control instance Fn-C-i for the network function Fn is instantiated in block 4-10, and values of dynamic characteristics of the network function Fn are obtained (retrieved) by transmitting a corresponding request (message 4-11) to the DB, the request containing the model identifier of the network function Fn, and receiving the values in a response (message 4-12). Then, for at least one control parameter, a parameter value is determined in block 4-13, for example as described above, based on the received values (one or more values).

The control instances receive feedback (messages 4-14) from the cloud where network function instances are running via the NFO entity and the G-C entity, the NFO entity collecting the feedback. The feedback is collected on network instances that are instantiated or re-instantiated after being de-instantiated. In other words, the feedback is collected on active (running) network instances. The feedback received by control instances may comprise the same feedback, wherein the control instances may use feedback related to a corresponding network function and ignore feedback relating to other network functions. The feedback may contain information on measured central processing unit usage, and/or on measured memory usage and/or on measured storage usage and/or on measured energy usage of the network function, for example.

In the illustrated example of Fig. 4, the control instances Fx-C-i and Fn-C-i are configured to determine (blocks 4-15, 4-16) the number of network instances to instantiate or de-instantiate using a control algorithm with at least one control parameter being adapted for the network function, as described above, and to evaluate the system response, including updating the values of the dynamic characteristics, for example, as described above.

In the illustrated example, it is assumed, for the sake of description, that the number of instances of the network function Fx is to be changed (block 4-15), i.e. scaled down (de-instantiate an instance) or scaled up (instantiate a further instance), and a corresponding request (message 4-17) is transmitted via the G-C entity and the NFO entity to the cloud, to the hardware running instances of the network function Fx to act accordingly. However, the system evaluation for the network function Fx in block 4-15 results that no updates to the dynamic characteristics are needed.

In the illustrated example, it is assumed, for the sake of description, that no change in the number of instances of the network function Fn is needed (block 4-16), but the system evaluation for the network function Fn in block 4-16 results that an update to one or more values of the dynamic characteristics is to be performed. Hence, a request to update the one or more values of the dynamic characteristics is transmitted to the DB, resulting that updated values of the dynamic characteristics of the network function Fn are stored to the DB. Hence, the model of the network function is improved by updating the values to be in accordance with the actual implementation of the network function. Depending on an implementation, the control instance may or may not update one or more control parameter values to correspond the updated values of the dynamic characteristics.

It should be appreciated that request response operations, or corresponding information exchange, described with messages 4-14, 4-17, 4-18 may happen more than once when a corresponding control instance for a network function is instantiated and active. Further, in some implementations no system evaluation is performed, or some of the control instances are configured to perform the system evaluation and to update the values of dynamic characteristic and some control instances are configured not to perform the system evaluation.

Fig. 5 illustrates an example of behavior of a network function and how dynamic characteristics may be determined from the measured behavior of the network function.

In the example of Fig. 5, the x axis indicates a time, which starts at the time (start time) the network function is instantiated, and the y axis indicates operational state of the network function instance, S meaning a steady state and T meaning a target state (a target value).

Referring to Fig. 5, the state of the network instance changes as shown by line 501 until it reaches the steady state. A first difference 502 between a state at the start and the target state, and a second difference 503 between the state at the start and the steady state may be used to determine the gain (process gain) by dividing the second difference 503 by the first difference 502.

The time delay 504 is the time from the start time to the time the network instance starts to operate, and the time constant 505 is the time from the end of the time delay to a time the network instance operational state is 63 % of the steady state (0,63S).

Alternatively, two auxiliary variables may be determined and used for determining the time delay and the time constant. The first auxiliary variable t1 is the time 506 from the start time to a time the operational state is 28 % of the steady state (0,28S). The second auxiliary variable t2 is the time 507 from the start time to a time the operational state is 40 % of the steady state (0,4S). The time delay and the time constant may be determined by using the following equations:

$$\text{Time delay} = 2{,}8t1 - 1{,}8t2$$

$$\text{Time constant} = 5{.}5(t2-t1)$$

Hence, by obtaining the time-state curve 501 of a network function, the characteristics may be determined automatically for the network function, for example using the above equations for the time delay and the time constant, and the above described equation to determine the gain. However, it should be appreciated that the numerical values given are based on empirical estimations, and any corresponding values may be used as well.

The blocks, related functions, and information exchanges (messages, operations) described above by means of Fig. 1 to Fig. 5 in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Fig. 6 illustrates an apparatus 601 according to some embodiments. The apparatus 601 may be an apparatus, e.g. an electrical device, for control instances and/or for the global controller and/or for the network function orchestrators, for example.

The apparatus 601 may comprise one or more communication control circuitry 620, such as at least one processor, and at least one memory 630, including one or more algorithms 631, such as a computer program code (software) wherein the at least one memory and the computer program code (software) are configured, with the at least one processor, to cause the apparatus to carry out any one of the exemplified functionalities of the control instance, or global controller (entity) or the network function orchestrator (entity), described above with any of Fig. 1 to Fig. 5. Said at least one memory 630 may also comprise at least one database 632.

According to an embodiment, there is provided an apparatus comprising at least one processor; and at least one memory including a computer program code, wherein the at least one memory and the computer program code are configured, with the at least one processor, to cause the apparatus to perform at least: determining values of at least one control parameter for network functions using values of dynamic characteristics of the network functions; determining for a network function a first number of instances to be instantiated or de-instantiated based on a target value and a latest value of at least one metric and at least a value of one control parameter for the network function; and controlling a number of instances of the network function based on the first number.

Referring to Fig. 6, the one or more communication control circuitries 620 of the apparatus 601 comprise at least a scaling circuitry 621 which is configured to perform control related functionalities, e.g. determine one or more control parameter values and/or determine number of instances to instantiate or de-instantiate, and/or control the number of instances and/or instantiate control instances, according to embodiments. To this end, the scaling circuitry 621 of the apparatus 601 is configured to carry out at least some of the functionalities described above, e.g., by means of Fig. 1 to Fig. 5, using one or more individual circuitries.

Referring to Fig. 6, the memory 630 may be implemented using any suitable data storage technology, such as semiconductor based memory devices, flash memory, magnetic memory devices and systems, optical memory devices and systems, fixed memory and removable memory.

Referring to Fig. 6, the apparatus 601 may further comprise different interfaces 610 such as one or more communication interfaces (TX/RX) comprising hardware and/or software for realizing communication connectivity according to one or more communication protocols. The one or more communication interfaces 610 may enable connecting to the Internet and/or to a core network of a wireless communications network and/or to a radio access network and/or to other entities within the SMO. The one or more communication interface 610 may provide the apparatus with communication capabilities to communicate in a cellular communication system and enable communication to different network nodes or elements. The one or more communication interfaces 610 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 7, at least some of the functionalities of the apparatus of Fig. 6 may be shared between two physically separate devices, forming one operational entity. Therefore, the apparatus may be seen to depict the operational entity comprising one or more physically separate devices for executing at least some of the described processes. Thus, the apparatus of Fig. 7, utilizing such shared, or disaggregated, architecture, may comprise a control unit CU 720, such as a host computer or a server computer, operatively coupled (e.g. via a wireless or wired network) to a distributed unit DU 722 located in an edge apparatus, or an apparatus in another domain, for example. In an embodiment, at least some of the described processes may be performed by the CU 720. In an embodiment, the execution of at least some of the described processes may be shared among the DU 722 and the CU 720.

Similar to Fig. 6, the apparatus of Fig. 7 may comprise one or more communication control circuitry (CNTL) 620, such as at least one processor, and at least one memory (MEM) 630, including one or more algorithms (PROG) 631, such as a computer program code (software) wherein the at least one memory and the computer program code (software) are configured, with the at least one processor, to cause the apparatus to carry out any one of the exemplified functionalities described above.

In an embodiment, the CU 720 may generate a virtual network through which the CU 720 communicates with the DU 722. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system.

In an embodiment, the virtual network may provide flexible distribution of operations between the DU and the CU. In practice, any digital signal processing task may be performed in either the DU or the CU and the boundary where the responsibility is shifted between the DU and the CU may be selected according to implementation.

According to an embodiment, a system comprises apparatuses of Fig. 6 and/or Fig. 7, or corresponding means, that provide at least part of said functionality.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 5 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 5 or operations thereof.

Embodiments and examples as described may also be carried out in the form of a computer process defined by a computer program or portions thereof. Embodiments of the functionalities described in connection with Fig. 1 to Fig. 5 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising:

   means for determining values of at least one control parameter for network functions using values of dynamic characteristics of the network functions;
   means for determining for a network function a first number of instances to be instantiated or de-instantiated based on a target value and a latest value of at least one metric and at least a value of one control parameter for the network function; and
   means for controlling a number of instances of the network function based on the first number.

2. The apparatus of claim 1, wherein

   the means for determining the values are configured to perform the determining per a network function using dynamic characteristics of said network function, and
   the means for determining the first number and the means for controlling the number of instances are configured to perform the determining and the controlling for a plurality of network functions in parallel.

3. The apparatus of claim 1 or 2, wherein the dynamic characteristics comprise a time delay, a time constant and a gain.

4. The apparatus of claim 3, wherein the means for determining values are configured to determine the value of the one control parameter using a value of the time delay, and/or a value of the time constant and/or a value of the gain of the network function.

5. The apparatus of any preceding claim, wherein the dynamic characteristics comprise one or more energy consumption parameters.

6. The apparatus of any preceding claim, wherein the means for determining the first number are configured to perform the determining based also on earlier values and a predicted value of the at least one metric.

7. The apparatus of any preceding claim, wherein the at least one metric comprises at least one metric indicating a resource usage and at least one metric indicating energy consumption.

8. The apparatus of claim 7, wherein the means for determining the first number are configured to perform the determining by minimizing energy consumption and maximizing resource usage while maintaining agreed service level.

**9.** The apparatus of any preceding claim, further comprising:

means for determining, based on feedback received after one or more network instances have been instantiated or re-instantiated for the network function, updated values of the dynamic characteristics of the network function; and
means for causing storing the updated values of the dynamic characteristics of the network function to a data repository.

**10.** The apparatus of any preceding claim, further comprising:

means for receiving requests for generating closed-loop controller instances for the network functions;
means for generating closed-loop controller instances for the network functions, a closed-loop controller instance per a network function,
wherein the means for determining the first number are configured to apply a closed-loop controller instance for the network function to determine the first number.

**11.** The apparatus of any preceding claim, the apparatus comprising at least one processor, and at least one memory including computer program code, wherein the at least one processor with the at least one memory and computer program code provide said means.

**12.** A method comprising:

determining values of at least one control parameter for network functions using values of dynamic characteristics of the network functions;
determining for a network function a first number of instances to be instantiated or de-instantiated based on a target value and a latest value of at least one metric and at least a value of one control parameter for the network function; and
controlling a number of instances of the network function based on the first number.

**13.** The method of claim 12, further comprising:

determining the values per a network function using dynamic characteristics of said network function; and
performing determining the first number and controlling the number of instances for a plurality of network functions in parallel.

**14.** The method of claim 12 or 13, wherein the dynamic characteristics comprise a time delay, a time constant and a gain, and the value of the one control parameter is determined using a value of the time delay, and/or a value of the time constant and/or a value of the gain of the network function.

**15.** A computer program comprising instructions which, when executed by an apparatus, cause the apparatus to perform at least the following:

determining values of at least one control parameter for network functions using values of dynamic characteristics of the network functions;
determining for a network function a first number of instances to be instantiated or de-instantiated based on a target value and a latest value of at least one metric and at least a value of one control parameter for the network function; and
controlling a number of instances of the network function based on the first number.

*FIG.1*

*FIG.2*

FIG.3

FIG.4

*FIG.5*

*FIG.6*

*FIG.7*

**EP 4 401 373 A1**

Europäisches Patentamt
European Patent Office
Office européen des brevets

# EUROPEAN SEARCH REPORT

Application Number

EP 23 21 1885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUONG DUC-HUNG ET AL: "Predictive Autoscaling Orchestration for Cloud-native Telecom Microservices", 2018 IEEE 5G WORLD FORUM (5GWF), IEEE, 9 July 2018 (2018-07-09), pages 153-158, XP033432744, DOI: 10.1109/5GWF.2018.8516950 [retrieved on 2018-10-31] * abstract; figures 1, 2, 3, 4 * * page 155 – page 157 * | 1-15 | INV. H04L41/0833 H04L41/342 |
| A | WISSAL ATTAOUI ET AL: "VNF and Container Placement: Recent Advances and Future Trends", ARXIV.ORG, CORNELL UNIVERSITY LIBRARY, 201 OLIN LIBRARY CORNELL UNIVERSITY ITHACA, NY 14853, 1 April 2022 (2022-04-01), XP091198553, * abstract; figures 1, 7, 8, 11, 12, 13 * * pages 10, 20 * * pages 21, 22 * | 1-15 | |
| A | CHAUDHRY SAQIB RASOOL ET AL: "Improved QoS at the Edge Using Serverless Computing to Deploy Virtual Network Functions", IEEE INTERNET OF THINGS JOURNAL, IEEE, USA, vol. 7, no. 10, 20 July 2020 (2020-07-20), pages 10673-10683, XP011813926, DOI: 10.1109/JIOT.2020.3011057 [retrieved on 2020-10-09] * the whole document * | 1-15 | **TECHNICAL FIELDS SEARCHED (IPC)** H04L |
| A | WO 2022/221260 A1 (INTEL CORP [US]) 20 October 2022 (2022-10-20) * abstract; figures 1, 4, 7, 10 * | 1-15 | |

The present search report has been drawn up for all claims

| Place of search | Date of completion of the search | Examiner |
|---|---|---|
| Munich | 12 March 2024 | Fantacone, Vincenzo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 401 373 A1**

## ANNEX TO THE EUROPEAN SEARCH REPORT
## ON EUROPEAN PATENT APPLICATION NO.

EP 23 21 1885

This annex lists the patent family members relating to the patent documents cited in  the above-mentioned European search report.
The members are as contained in the European Patent Office EDP file on
The European Patent Office is in no way liable for these particulars which are merely given for the purpose of information.

12-03-2024

| Patent document cited in search report | Publication date | Patent family member(s) | Publication date |
|---|---|---|---|
| WO 2022221260    A1 | 20-10-2022 | NONE | |

EPO FORM P0459

For more details about this annex : see Official Journal of the European Patent Office, No. 12/82

16